Europäisches Patentamt

European Patent Office

Office européen des brevets

(11) Veröffentlichungsnummer: **0 029 599**
**B1**

(12) **EUROPÄISCHE PATENTSCHRIFT**

(45) Veröffentlichungstag der Patentschrift: **20.02.85**

(21) Anmeldenummer: **80107278.6**

(22) Anmeldetag: **21.11.80**

(51) Int. Cl.⁴: **B 65 G 67/62**

(54) **Fördereinrichtung zur steilen Entladung von Schiffen und sonstigen Behältern.**

(30) Priorität: **22.11.79 CH 10438/79**
**07.05.80 CH 3550/80**

(43) Veröffentlichungstag der Anmeldung:
**03.06.81 Patentblatt 81/22**

(45) Bekanntmachung des Hinweises auf die
Patenterteilung:
**20.02.85 Patentblatt 85/08**

(84) Benannte Vertragsstaaten:
**CH DE FR GB IT LI NL SE**

(56) Entgegenhaltungen:
**CH-A- 251 563**
**CH-A- 487 794**
**DE-A-2 018 120**
**DE-C- 127 752**
**NL-A-7 408 403**
**US-A-3 640 376**

(73) Patentinhaber: **Gebrüder Bühler AG**
**CH-9240 Uzwil (CH)**

(72) Erfinder: **Straub, Paul**
**Feldholzstrasse 12a**
**CH-9242 Oberuzwil (CH)**

(74) Vertreter: **Dipl.-Phys.Dr. Manitz Dipl.-Ing.**
**Finsterwald Dipl.-Ing. Grämkow Dipl.-Chem.Dr.**
**Heyn Dipl.-Phys.Rotermund**
**B.Sc. Morgan Robert-Koch-Strasse 1**
**D-8000 München 22 (DE)**

Courier Press, Leamington Spa, England.

## Beschreibung

Die Erfindung betrifft eine Fördereinrichtung zur steilen Entladung von Schiffen und sonstigen Behältern mit zumindest einem steilen Förderer, der einen Fördertrog und einen Rücklauftrog zwischen Aufnahmefuß und Antriebskopf aufweist und der an einem in einer senkrechten Ebene auf- und abschwenkbaren, einen Auslegerförderer tragenden Ausleger so angelenkt ist, daß eine Verschwenkung des steilen Förderers in einer die Achsen der beiden Tröge enthaltenden und parallel zur senkrechten Bewegungsebene des Auslegers verlaufenden Förderebene um eine quer zu dieser im wesentlichen horizontal gelegene, in Abstand unterhalb des Antriebskopfes verlaufende erste Schwenkachse um einen beträchtlichen Winkel ermöglicht ist, welcher Förderer eine seitlich die Förderebene überragende Austragsvorrichtung aufweist, deren unterer Teil über den gesamten Schwenkbereich des steilen Förderers den geförderten Produktstrom zu dem Auslegerförderer zuführt.

Eine Fördereinrichtung dieser Art ist aus der DE—A 2 018 120 bekannt und weist zwei als Trogkettenförderer ausgebildete Steilförderer auf, die an einem Wippausleger eines Krangerüstes angelenkt und mittels eines hydraulischen Kolben-Zylinder-Aggregates in durch die Achsen ihrer Tröge bestimmten Förderebenen um die Anlenkachse verschwenkbar sind. Das geförderte Produkt wird einem dem Wippausleger zugeordneten, weiterführenden Auslegerförderer über eine seitlich der Förderebenen austragende Übergabevorrichtung zugeführt. Diese verbindet die beiden Trogkettenförderer miteinander und besteht aus zwei Querkästen mit einem gemeinsamen Trichter, der in ein Fallrohr übergeht. Dieses ist bei der Anlenkachse mit dem Auslegerförderer verbunden, welche zwei dem Zweck entsprechend ausgebildete Zuführkästen aufweist. Bei dieser Fördereinrichtung sind die Steilförderer nur in einer Ebene verschwenkbar und die Austragsvorrichtung ist kompliziert und aufwendig.

Bei der genannten Anordnung können große Spannungen im Förderer und Ausleger aufgrund von seitlich an den Förderer im Betrieb auftretenden Kräften entstehen.

Die Aufgabe der vorliegenden Erfindung ist somit, eine Fördereinrichtung der eingangs genannten Art derart auszubilden, daß die quer zur Förderebene auf den Förderer einwirkenden Kräfte sowie die daraus resultierenden Biegemomente im steilen Förderer bzw. Torsionsmomente im Ausleger vermindert werden können, um dadurch eine leichtere Bauweise zu ermöglichen.

Gelöst wird diese aufgabe dadurch, daß eine zweite parallel zur Förderebene etwa senkrecht zu den Trögen in Abstand unterhalb des Antriebskopfes verlaufende Schwenkachse vorgesehen ist, um die der steile Förderer eine seitliche Ausweichbewegung ausführen kann, und daß die Austragsvorrichtung auch während dieser Ausweichbewegung eine Zuführung des Produktstromes zum Auslegerförderer gewährleistet.

Diese Anordnung hat den Vorteil einer einfachen Konstruktion, die sowohl für einen als auch für zwei an einen gemeinsamen Ausleger angelegte steile Förderer anwendbar ist. Um an das Produkt über die gesamte Breite des Schiffes gelangen zu können, ist in erster Linie die Schwenkmöglichkeit innerhalb der Förderebene von Interesse. Die Schwenkmöglichkeit in der Querebene ist vor allem interessant, weil diese die Übertragung von Torsionsmomenten auf den Ausleger vermeiden läßt. Dieser wesentliche Vorteil bedeutet, daß der Ausleger wesentlich leichter gebaut sein und trotzdem seine Aufgabe ohne Beeinträchtigung erfüllen kann.

Zwar ist es durch die CH—A 251 563 bereits bekannt gewesen, einen steilen Förderer innerhalb des Antriebskopfes kardanisch aufzuhängen, jedoch wie aus dieser Druckschrift hervorgeht, dient diese Anordnung dazu, daß mehrere solcher Förderelemente winklig zueinander eingestellt werden können, um das zu fördernde Gut längs den Seiten eines Laderaumes erfassen zu können. Diese Druckschrift gibt keine Lehre dazu, wie bei einer Anordnung gemäß DE—B 2 018 120 Kräfte quer zur Förderebene vermieden werden können.

Nach einer Ausführungsform der Erfindung sind die beiden Schwenkachsen durch ein Kugelgelenk gebildet, welches vorzugsweise zwischen den beiden Trögen angeordnet ist.

Eine besonders bevorzugte Ausführungsform der Erfindung zeichnet sich dadurch aus, daß die beiden Schwenkachsen durch Drehachsen bestimmt sind, welche zu einer kardanischen Aufhängung vereinigt sind.

Die die zweite Schwenkachse bestimmende Drehachse ist dabei vorzugsweise eine in Lagern der Tröge drehbar gelagerte durchgehende Drehwelle.

Die beiden Drehachsen können mit Vorteil in einem Rahmen angeordnet werden, mit welchem sie fest verbunden sind.

Die kardanische Aufhängung ist bevorzugt symmetrisch relativ zu den Trögen angeordnet. Durch diese Anordnung wird der zur Verfügung stehende Platz voll ausgenützt und das Gebilde entsprechend versteift.

Die vorgenannten Möglichkeiten stellen Lösungen dar, die die angestrebte Funktion auf einfache und praktische Weise mit kleinem Bauaufwand einwandfrei erfüllen.

Bei diesen Ausführungsformen ist ein ungestörtes Überführen des Produktes auf den Auslegerförderer auch bei Verschwenkung des steilen Förderers stets gewährleistet, obwohl die Austragsvorrichtung des steilen Förderers seitlich der Förderebene angeordnet ist und dadurch zumindest teilweise während Schwenkbewegungen des Förderers sich relativ zum Einlaufkasten des Auslegerförderers bewegen muß. Eine solche Austragsvorrichtung kann mit Vorteil aus zwei beweglich zueinander angeordneten Teilen bestehen, deren stromaufwärts gelegenes Oberteil mit einem an den Fördertrog angeschlossenen Austragsrichter fest verbunden ist, und deren stromabwärts gelegenes Unterteil in einen Einlaufkasten über dem Auslegerförderer einmündet.

Die Einmündung des Unterteils in den Einlaufkasten ist vorzugsweise mit der ersten Schwenkachse koaxial entsprechend der aus der DE—B 2 108 120 bekannten Anordnung, wobei der Unterteil mit dem Einlaufkasten in axialer Richtung der ersten Schwenkachse im wesentlichen unbeweglich verbunden und relativ zu diesem Einlaufkasten um die erste Schwenkachse drehbeweglich angeordnet ist. Bei einem Verschwenken des steilen Förderers um die erste Schwenkachse gibt es keine Relativbewegung zwischen Oberteil und Unterteil, sondern lediglich eine Verdrehung des Unterteils bezüglich des Einlaufkastens. Diese relative Drehbewegung läßt sich dadurch leicht abdichten, so daß weder Staub noch das Produkt durch die Drehverbindung entweichen können, daß eine Dichtung, vorzugsweise eine Lippendichtung, zwischen dem Unterteil und dem Einlaufkasten angeordnet ist. Die Dichtung wird mit Schrauben und gegebenenfalls einem ringförmigen Band an einem Flansch des Einlaufkastens befestigt und liegt an dem Untertil an.

Die relative Bewegung zwischen dem Oberteil und dem Unterteil der Austragsvorrichtung ist mit Vorteil dadurch ermöglicht, daß die Enden der Teile der Austragsvorrichtung teleskopierend ineinandergreifend ausgebildet sind und die Teleskopierbewegung entlang einer kreisförmigen Bahn verläuft, deren Mittelpunkt sich auf der zweiten Schwenkachse befindet. Die teleskopierend ineinandergreifenden Enden der Teile der Austragsvorrichtung sind vorzugsweise in dem zur zweiten Schwenkachse am nächsten liegenden Bereich der Austragsvorrichtung angeordnet. Dadurch findet bei Verschwenkung des steilen Förderers um die zweite Schwenkachse eine im wesentlichen minimale Teleskopierbewegung statt. Die bewegliche Verbindung zwischen den Enden des Ober- und Unterteils ist bevorzugt mit einer Dichtmanschette umgeben, welche sowohl mit dem Oberteil wie auch mit dem Unterteil fest verbunden ist.

Die vorgenannten Merkmale ermöglichen eine allseitige Verschwenkung des steilen Förderers, ohne daß die Verbindung zwischen der Austragsvorrichtung und dem Einlaufkasten und damit der geförderte Produktstrom unterbrochen wird.

Nachstehend werden Ausführungsbeispiele der Erfindung anhand der Zeichnung erläutert. Es zeigen:

Fig. 1 eine Seitenansicht eines Oberteils einer Fördereinrichtung mit steilen Förderer, Ausleger und Auslegerförderer;

Fig. 2 einen Schnitt in größerem Maßstab durch die Fördereinrichtung der Fig. 1 entlang der Linie II—II, aus welchem die Abstützung des steilen Förderers durch zwei Drehachsen hervorgeht;

Fig. 2a eine vergrößerte Darstellung eines Teils der Fig. 2;

Fig. 3 eine Draufsicht auf eine bei der Fördereinrichtung nach der Fig. 3 verwendete, kardanische Aufhängung zur Anlenkung des steilen Förderers am Ausleger;

Fig. 4 einen Schnitt entlang der Linie IV—IV durch die kardanische Aufhängung nach der Fig. 3,

Fig. 5 eine teilweise geschnittene Ansicht einer zwischen dem steilen Förderer und dem Auslegerförderer angeordneten Austragsvorrichtung;

Fig. 5a eine vergrößerte Darstellung der Dichtung der Fig. 5;

Fig. 5b und 5c zeigen andere Abdichtungsmöglichkeiten.

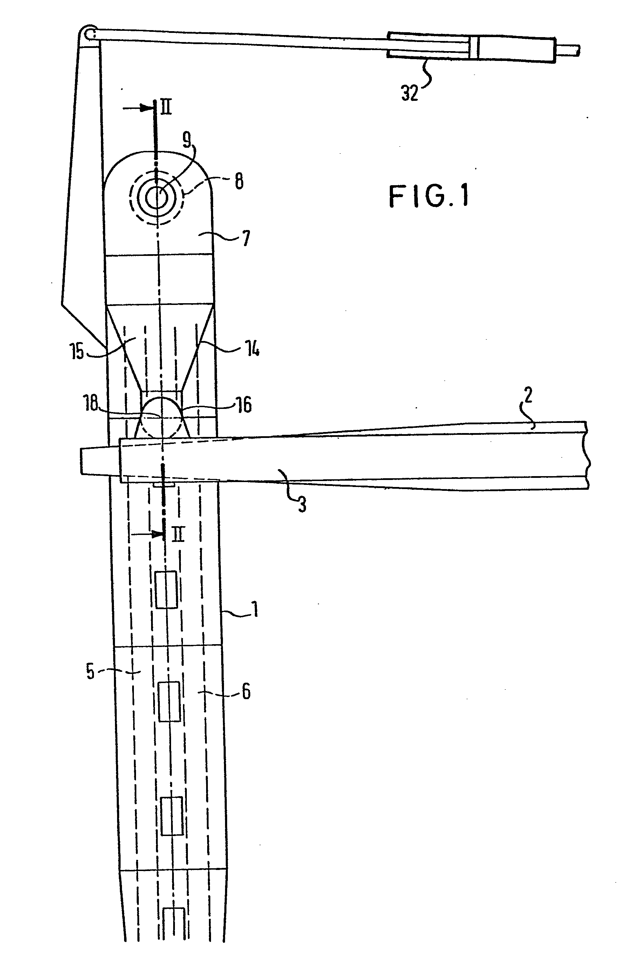

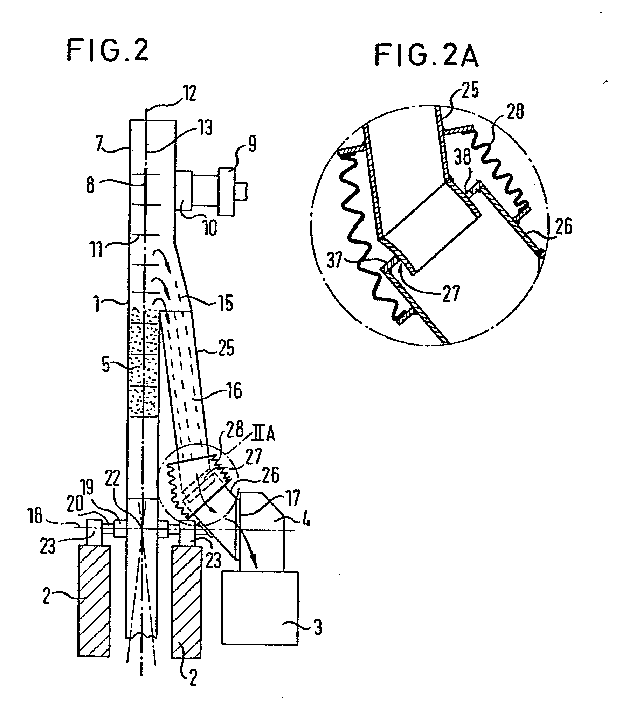

In den Fig. 1, 2 und 2a ist ein steiler Förderer 1 an zwei Trägern eines Auslegers 2 mit einem oberhalb des letzteren angeordneten Einlaufkastens 4 verschwenkbar angelenkt. Der steile Förderer 1 weist einen Fördertrog 5, einen Rücklauftrog 6 und ein im Antriebskopf 7 drehbar gelagertes Antriebsrad 8 auf. Dieses ist durch einen Ölmotor bzw. einem hydraulischen Motor 9 über ein Getriebe 10 angetrieben und überführt eine Förderkette 1 vom Fördertrog 5 zum Rücklauftrog 6. Die Längsachsen 12, 12′ der beiden Tröge 5, 6 bestimmen eine Förderebene 13, deren mittlere Lage mit der Symmetrieebene des Auslegers 2 zusammenfällt. Der Antriebskopf 7 weist einen in der Fig. 2 relativ zur Förderebene 13 seitlich herausragenden, durch trichterförmig verlaufende Seitenwände 14 begrenzten Austragstrichter 15 und eine an diesen angeschlossene, in den Einlaufkasten 4 einmündende Austragsvorrichtung 16 auf. Der Einlaufkasten 4 besitzt eine kreisförmige Einlaufbohrung 17, die auf der Höhe einer ersten Drehachse 20 koaxial zu dieser angeordnet ist.

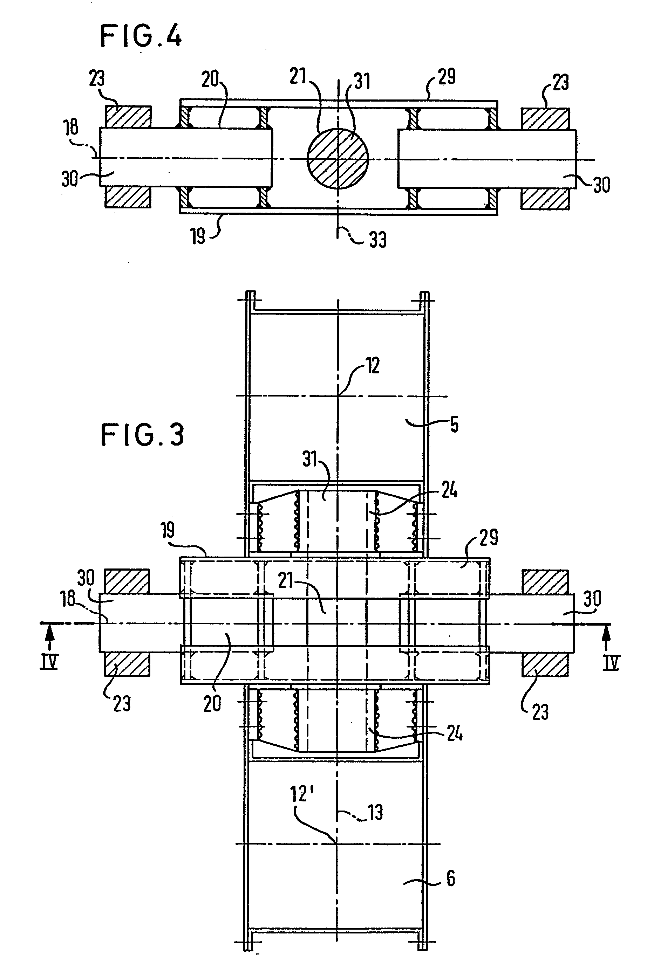

Der steile Förderer 1 ist am Ausleger 2 mittels einer kardanischen Aufhängung angelenkt. Aufgrund dieser Aufhängung welche in den Fig. 3 und 4 im Detail dargestellt und weiter unten eingehend beschrieben ist, ist der steile Förderer über die erste Drehachse 20 um deren Schwenkachse 18 in der Förderebene 13, und über eine senkrecht zur Drehachse 20 verlaufende zweite Drehachse 21 in einer zur Förderebene 13 senkrechten Querebene verschwenkbar. Die erste Drehachse 20 verläuft horizontal und ist zwischen den Trögen in Lagern 23 des Auslegers 2 drehbar gelagert. Die zweite Drehachse 21 verläuft senkrecht zur ersten Drehachse 20 und ist in Lagern 24 der Tröge 5, 6 drehbar gelagert.

Die Austragsvorrichtung 16 weist einen mit

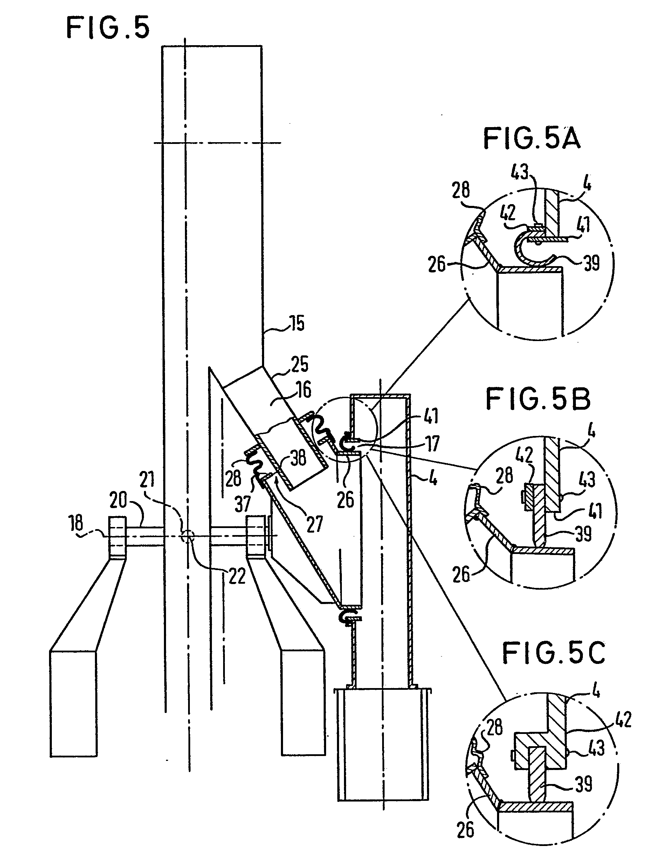

dem Austragtrichter 15 fest verbundenen Oberteil 25 und einen vom letzteren getrennten, auf der Seite der Drehachsen 20, 21 in den Einlaufkasten 4 einmündenden Unterteil 26 auf. Dieser ist an der ersten Drehachse 20 zugewendeten Seite mit dieser fest verbunden und an seinem Auslaufende in der Bohrung 17 des Einlaufkastens 4 um die Schwenkachse 18 der ersten Drehachse verdrehbar, jedoch in axialer Richtung unbeweglich angeordnet, Das Oberteil 25 verläuft in einem steilen Winkel, und das Unterteil 26 in einem Weniger steil verlaufenden Winkel relativ zur Förderebene 13. Die Teile 25, 26 sind beweglich zueinander angerodnet, d.h. das Oberteil 25 kann entsprechend der Schwenkbewegung um die Schwenkachse 22 im Unterteil 26 hinein- und hinausgeschoben werden. Die Verbindung zwischen dem Oberteil 25 und dem Unterteil 26 ist als teleskopierende Verbindung ausgebildet und ist in dem zur zweiten Drehachse 21 am nächsten liegenden Bereich der Austragsvorrichtung 16 angeordnet. Die teleskopierenden Enden der Teile 25, 25, welche in Fig. 2a besonders deutlich zu erkennen sind, sind kreisförmig gekrümmt ausgebildet, so. daß die Teleskopierbewegung entlang einer kreisförmigen Bahn verläuft, deren Mittelpunkt sich auf der Schwenkachse 22 der zweiten Drehachse 21 befindet. Das Auslaßende 36 des Oberteils 25 bzw. die Einlaßöffnung im Unterteil 26 sind im Querschnitt im wesentlichen viereckig ausgebildet, was die Herstellung der sich ineinander teleskopierenden Enden erleichtert und ein möglichst geringes Spiel zwischen den beiden Teilen erfordert, so daß weder Produkt noch Staub leicht entweichen kann. Die Einlaßöffnung 38 in dem Unterteil ist bevorzugt durch eine Platte 37 ausgebildet, wobei die Platte einen kreisrunden Außenumfang und eine viereckige Öffnung 38 haben sollte. Das Unterteil 26 kann dementsprechend im Querschnitt kreisrund sein. Eine die bewegliche Verbindung 27 umgebende Dichtmanschette 28 ist mit beiden Teilen 25, 26 dicht verbunden und sorgt für eine staubfreie Einspeisung des geförderten Produktstromes in den Einlaufkasten 4. Die Ausbildung der beweglichen Verbindung zwischen dem Unterteil 26 und dem Einlaufkasten 4 ist in Fig. 5a bzw. 5b, 5c zu erkennen.

Nach den Fig. 3 und 4 weist die kardanische Aufhängung 19 einen Rahmen 29 mit zwei in seiner Längsrichtung verlaufenden, in den Lagern 23 des Auslegers 2 drehbar gelagerten Drehzapfen 30 auf, die als erste Drehachse 20 dienen und die erste Schwenkachse 18 definieren. Zwischen den beiden Drehzapfen 30 verläuft in der Querrichtung, eine als zweite Drehachse 21 dienende Drehwelle 31, die relativ zum Rahmen 29 feststehend und in Lagern 24 der Tröge 5, 6 drehbar gelagert ist. Die zweite Drehachse 21 definiert die zweite Schwenkachse 22, welche mit der ersten Drehachse 18 in einer quer zur Förderebene angeordneten Ebene liegt.

Wenn der steile Förderer 1 mittels des Schwenkzylinders 32 in der Förderebene 13 verschwenkt wird, wird die Austragsvorrichtung 16 mitverschwenkt, wobei sich das Oberteil 26 in der Einlaufbohrung 17 um die Schwenkachse 18 ungehindert verdrehen kann. Der Schwenkwinkel kann dabei beliebig sein und ist lediglich durch die Hublänge des Schwenkzylinders 32 begrenzt.

Die Aufhängung des steilen Förderers ermöglicht eine seitliche Ausweichung desselben, um die Schwenkachse 22 um die Übertragung von im Betrieb entstehenden Stößen auf dem Ausleger zu vermeiden. Wenn derartige Ausweichungen um die Schwenkachse 22 in einer zur Förderebene 13 senkrechten Querebene stattfindet, bleibt das Unterteil 26 feststehend, jedoch das Oberteil 25 wird mit dem Förderer 1 mitverschwenkt und relativ zum Unterteil 26 verschoben. Diese Verschiebung ist über die teleskopierende Verbindung 27 der beiden Teile 25, 26 möglich. Selbstverständlich kann der steile Förderer 1 um beide schwenkachsen 18, 22 in beliegiber Richtung verschwenkt werden, ohne daß ein Auskuppeln, ein Verklemmen der beiden Teile 25, 26 oder eine Unterbrechung des geförderten Produktstromes stattfindet.

Einzelheiten einer bevorzugten Austragsvorrichtung sind in Fig. 5 und 5a dargestellt. Der steile Förderer der Anordnung gemäß Fig. 5 ist entsprechend der Anordnung gemäß Fig. 1 bis 4 mittels einer zwischen den Trögen angeordneten kardanischen Aufhängung von Ausleger 2 getragen. Die Austransvorrichtung 16 weist ebenfalls einen mit dem Austragtrichter 15 fest verbundenen Oberteil 25 und einen vom letzteren getrennten, auf der Seite der Drehachsen 20, 21 in den Einlaufkasten 4 einmündenden, mit dem Oberteil 25 beweglich verbundenen Unterteil 26 auf. Der Unterteil 26 ist mit der ersten Drehachse 20 fest verbunden und an seinem Auslaufende in der Einlaufbohrung 17 des Einlaufkastens 4 um die erste Schwenkachse 18 drehbeweglich, in axialer Richtung hingegen unbeweglich angeordnet, In vertikaler stellund des steilen Förderers 1 entspricht die Steilheit des Unterteiles 26 derjenigen des Oberteiles 25. Die als teleskopierende Verbindung ausgebildete, bewegliche Verbindung 27 ist in einem Bereich der Austragsvorrichtung 16 angeordnet, der zur zweiten Drehachse 21 am nächsten liegt. Eine dem Oberteil 25 zugewendete Stirnfläche 30 des Unterteiles 26 verläuft radial in bezug auf die zweite Drehachse 22 und senkrecht zur Neigungsrichtung der Teile 25 und 26. Mit diesen Merkmalen wird erreicht, daß bei Verschwenkung des steilen Förderers 1 um die zweite Schwenkachse 22 eine minimale Bewegung des Oberteils 25 stattfindet.

Die Verbindung 27 dieser Ausführungsform ist etwas einfacher gestaltet als die im Zusammenhang mit der ersten Ausführungsform beschriebene Anordnung. Bei der gezeigten Ausbildung läßt man einfach genügend Spielraum zwischen dem Oberteil 25 und der Öffnung 38 in der Platte 37 des Unterteiles 26, um Verklemmungen zu vermeiden. Sowohl das Oberteil 25 als auch das Unterteil 26 sind in diesem Beispiel im Querschnitt kreisrund. Falls aufgrund der Eigenschaften des Produktes und der Größe des Spielraums zu viel Staub in der die bewegliche Verbindung umgebende Dichtmanschette sammelt, so könnte man auch hier zu der Ausbildung gemäß Fig. 2a zurückgriefen.

Die Dichtmanschette 28 umgibt die bewegliche Verbindung 27 und ist mit den Teilen 27 und 26 fest verbunden. Sie schützt die Verbindung 27 nach außen und sorgt für eine staubfreie Einspeisung des geförderten Produktstromes in den Einlaufkasten 4.

Die Fig. 5a zeigt die ringförmige manschettenartige Gummilippendichtung 39, welche zwischen dem Unterteil 26 und dem Einlaufkasten 4 angeordnet ist. Diese Dichtung ist an dem die Einmündung 17 begrenzenden Flansch 41 befestigt, z.B. mittels des bandes 42 und der Schrauben 43 und besitzt eine ringförmige Kontaktfläche 44, welche am Flanschteil 45 des Unterteils 26 leicht anliegt. Das Unterteil kann sowohl eine Drehbewegung als auch eine kleine axiale Verschiebung relativ zu dem Einlaufkasten ausüben, ohne die Dichtwirkung der Dichtung 39 zu beeinträchtigen. Fig. 5b und 5c zeigen andere Abdichtungsmöglichkeiten mit einer besonders einfachen Lippendichtung, welche preisgünstig herzustellen ist und welche entweder mit einem losen Ring oder in einer Ringnut befestigt werden kann.

Es sind auch andere Ausführungsformen der Erfindung möglich. Der steile Förderer 1 kann relativ zum Ausleger 2 asymmetrisch angeordnet sein. Es können zwei steile Förderer 1 vorgesehen sein. Die Drehachsen 20, 21 müssen nicht unbedingt zu einer kardanischen Aufhängung 19 vereinigt sein, sie können z.B. auch als Kugelgelenk ausgeführt oder durch zwei in verschiedenen Ebenen verlaufend als einstückige Drehwellen ausgebildete Drehachsen verwirklicht sein. Die bewegliche Verbindung 27 zwischen den beiden Teilen 25, 26 kann z.B. eine Faltenbalgverbindung sein. Andere Anordnungen, bei denen die Austragsvorrichtung aus mehr als zwei beweglich zueinander angeordneten Teilen besteht, gegebenenfalls unter Verwendung von mehreren Dichtmanschetten, sind auch ohne weiteres möglich.

Einzelheiten eines besonders vorteilhaft mit der Erfindung verwendbaren Steilförderers sind in der EP—A 00 25 981 beschrieben worden.

In der üblichen Weise ist der steile Förderer für Schwenkbewegungen in der Förderebene über die Schwenkvorrichtung 32 an einem am Kai fahrbaren und/oder drehbaren Kran bzw. Turm befestigt. Die Schwenkbewegung des steilen Förderers in der Querebene ist jedoch normalerweise eine freie Bewegung. Dies schließt jedoch nicht aus, daß auch die Schwenkbewegung in der Querebene durch ein angebundenes Seil gesteuert werden kann.

**Patentansprüche**

1. Fördereinrichtung zur steilen Entladung von Schiffen und sonstigen Behältern mit zumindest einem steilen Förderer (1), der einen Fördertrog (5) und einen Rücklauftrog (6) zwischen Aufnahmefuß und Antriebskopf (7) aufweist und der an einem in einer senkrechten Ebene auf- und abschwenkbaren, einen Auslegerförderer tragenden Ausleger (2) so angelenkt ist, daß eine Verschwenkung des steilen Förderers (1) in einer die Achsen der beiden Tröge (5, 6) enthaltenden und parallel zur senkrechten Bewegungsebene des Auslegers (2) verlaufenden Förderebene (13) um eine quer zu dieser im wesentlichen horizontal gelegene, in Abstand unterhalb des Antriebskopfes verlaufende erste Schwenkachse (18) um einen beträchtlichen Winkel ermöglicht ist, welcher Förderer eine seitlich die Förderebene (13) überragende Austragsvorrichtung (16) aufweist, deren unterer Teil (26) über den gesamten Schwenkbereich des steilen Förderers den geförderten Produktstrom zu dem Ausleger förderer (3) zuführt, dadurch gekennzeichnet, daß eine zweite parallel zur Förderebene (13) etwa senkrecht zu den Trögen (5, 6) in Abstand unterhalb des Antriebskopfes (7) verlaufende Schwenkachse (22) vorgesehen ist, um die der steile Förderer (1) eine seitliche Ausweichbewegung ausführen kann, und daß die Austragsvorrichtung (16) auch während dieser Ausweichbewegung eine Zuführung des Produktstromes zum Auslegerförderer (3) gewährleistet.

2. Fördereinrichtung nach Anspruch 1, dadurch gekennzeichnet, daß die beiden Schwenkachsen (18, 22) durch ein Kugelgelenk gebildet sind.

3. Fördereinrichtung nach Anspruch 1, dadurch gekennzeichnet, daß die beiden Schwenkachsen (18, 22) durch Drehachsen (20, 21) bestimmt sind, welche zu einer kardanischen Aufhängung (19) vereinigt sind.

4. Fördereinrichtung nach Anspruch 3, dadurch gekennzeichnet, daß die die zweite Schwenkachse (22) bestimmende Drehachse (21) eine in Lagern (24) der Tröge (5, 6) drehbar gelagerte durchgehende Drehwelle (31) ist.

5. Fördereinrichtung nach Anspruch 4, dadurch gekennzeichnet, daß die beiden Drehachsen (20, 21) in einem Rahmen (29) angeordnet sind, mit welchem sie fest verbunden sind.

6. Fördereinrichtung nach einem der Ansprüche 3 bis 5, dadurch gekennzeichnet, daß die kardanische Aufhängung (19) relativ zu den Trögen (5, 6) symmetrisch angeordnet ist.

7. Fördereinrichtung nach einem der Ansprüche 1 bis 6, dadurch gekennzeichnet, daß die Austragsvorrichtung (16) aus zwei beweglich zueinander angeordneten Teilen (25, 26) besteht, deren stromaufwärts gelegenes Oberteil (25) mit einem an dem Fördertrog (5) angeschlossenen Austragstrichter (15) fest verbunden ist, und deren stromabwärts gelegenes Unterteil (26) in einen Einlaufkasten (4) über dem Auslegerförderer (3) einmündet.

8. Fördereinrichtung nach Anspruch 7, dadurch gekennzeichnet, daß die Einmündung des Unterteils (26) in den Einlaufkasten (4) mit der ersten Schwenkachse (18) koaxial ist.

9. Fördereinrichtung nach Anspruch 8, dadurch gekennzeichnet, daß der Unterteil (26) mit dem Einlaufkasten (4) in axialer Richtung der ersten Schwenkachse (18) im wesentlichen unbeweglich verbunden und relativ zu diesem Einlaufkasten (4) um die Schwenkachse (18) drehbeweglich angeordnet ist.

10. Fördereinrichtung nach Anspruch 9, dadurch gekennzeichnet, daß eine Dichtung (39), vorzugsweise eine Lippendichtung (Fig. 5a, 5b, 5c) zwischen dem Unterteil (26, 26') und dem Einlaufkasten (4) angeordnet ist.

11. Fördereinrichtung nach Anspruch 10, dadurch gekennzeichnet, daß die Dichtung mit Schrauben (43) und gegebenenfalls einem ringförmigen Band (42) an einem Flansch (41) des Einlaufkastens befestigt ist und an dem Unterteil (26, 26') anliegt.

12. Fördereinrichtung nach einem der Ansprüche 7 bis 11, dadurch gekennzeichnet, daß die Enden der Teile (25, 26) der Austragsvorrichtung (16) teleskopierend ineinandergreifend ausgebildet sind und die Teleskopierbewegung entlang einer kreisförmigen Bahn verläuft, deren Mittelpunkt sich auf der zweiten Schwenkachse (22) befindet.

13. Fördereinrichtung nach Anspruch 12, dadurch gekennzeichnet, daß eine Dichtmanschette (28) die bewegliche Verbindung (27) umgibt und sowohl mit dem Oberteil (25) wie auch mit dem Unterteil (26) fest verbunden ist.

**Revendications**

1. Convoyeur pour le déchargement abrupt de navires et autres conteneurs, comportant au moins un convoyeur (1) à pente raide qui présente une auge de convoyage (5) et une auge de retour (6) entre une base réceptrice et une tête d'entraînement (7), et qui est articulé, sur une flèche (2) pouvant pivoter vers le haut et vers le bas dans un plan vertical et supportant un convoyeur en porte-à-faux, de façon à autoriser un pivotement, d'un angle considérable, du convoyeur (1) à pente raide dans un plan d'acheminement (13) renfermant les axes des deux auges (5, 6) et s'étendant parallèlement au plan vertical de mouvement de la flèche (2), autour d'un premier axe de pivotement (18) perpendiculaire audit plan, situé pour l'essentiel horizontalement et s'étendant à distance au-dessous de la tête d'entraînement, lequel convoyeur comporte un dispositif d'évacuation (16) faisant saillie latéralement au-delà du plan d'acheminement (13) et dont la partie inférieure (26) achemine le flux de produit convoyé vers le convoyeur (3) en porte-à-faux, sur toute la plage de pivotements du convoyeur à pente raide, caractérisé par le fait qu'il est prévu un second axe de pivotement (22) s'étendant parallèlement au plan d'acheminement (13), à peu près perpendiculairement aux auges (5, 6) et à distance au-dessous de la tête d'entraînement (7), et autour duquel le convoyeur (1) à pente raide peut effectuer un mouvement d'excursion latérale; et par le fait que le dispositif d'évacuation (16) garantit, également pendant ce mouvement d'excursion, un acheminement du flux de produit vers le convoyeur (3) en porte-à-faux.

2. Convoyeur selon la revendication 1, caractérisé par le fait que les deux axes de pivotement (18, 22) sont formés par une articulation à rotule.

3. Convoyeur selon la revendication 1, caractérisé par le fait que les deux axes de pivotement (18, 22) sont déterminés par des axes de rotation (20, 21) qui sont réunis en une suspension (19) à la cardan.

4. Convoyeur selon la revendication 3, caractérisé par le fait que l'axe de rotation (21) déterminant le seconde axe de pivotement (22) consiste en un arbre rotatif ininterrompu (31) monté à rotation dans des paliers (24) des auges (5, 6).

5. Convoyeur selon la revendication 4, caractérisé par le fait que les deux axes de rotation (20, 21) sont disposés dans un châssis (29) auquel ils sont reliés rigidement.

6. Convoyeur selon l'une des revendications 3 à 5, caractérisé par le fait que la suspension (19) à la cardan est agencée symétriquement par rapport aux auges (5, 6).

7. Convoyeur selon l'une des revendications 1 à 6, caractérisé par le fait que le dispositif d'évacuation (16) se compose de deux parties (25, 26) montées mobiles l'une par rapport à l'autre, dont la partie supérieure (25) située en amont est fixée rigidement à un entonnoir d'évacuation (15) raccordé à l'auge de convoyage (5), et dont la partie inférieure (26) située en aval débouche dans un caisson d'admission (4) au-dessus du convoyeur (3) en porte-à-faux.

8. Convoyeur selon la revendication 7, caractérisé par le fait que l'embouchure de la partie inférieure (26) dans la caisson d'admission (4) est coaxiale au premier axe de pivotement (18).

9. Convoyeur selon la revendication 8, caractérisé par le fait que la partie inférieure (26) est reliée pour l'essentiel avec immobilisation au caisson d'admission (4) dans le sens axial du premier axe de pivotement (18), et est montée à mouvement rotatoire autour de l'axe de pivotement (18) par rapport à ce caisson d'admission (4).

10. Convoyeur selon la revendication 9, caractérisé par le fait qu'une garniture d'étanchéité (39), de préférence une lèvre d'étanchéité (fig. 5a, 5b, 5c) est interposée entre la partie inférieure (26, 26') et le caisson d'admission (4).

11. Convoyeur selon la revendication 10, caractérisé par le fait que la garniture d'étanchéité est fixée par des vis (43) et éventuellement par une bande annulaire (42) à une aile (41) du caisson d'admission, et est appliquée contre la partie inférieure (26, 26').

12. Convoyeur selon l'une des revendications 7 à 11, caractérisé par le fait que les extrémités des parties (25, 26) du dispositif d'évacuation (16) sont réalisées en s'interpénétrant télescopiquement, et le mouvement télescopique se produit le long d'une trajectoire circulaire dont le centre se trouve sur le second axe de pivotement (22).

13. Convoyeur selon la revendication 12, caractérisé par le fait qu'un soufflet d'étanchéité (28) entoure la liaison mobile (27) et est aussujetti dant à la partie supérieure (25) qu'à la partie inférieure (26).

## Claims

1. A conveying device for the steep unloading of ships and other containers with at least one elevator (1), the elevator having a conveyor duct (5) and a return duct (6) between the intake boot and the drive head (7) and being so pivotally connected to a boom (2), which can be swung up and down in a vertical plane and which carries a boom conveyor, that pivoting of the elevator (1) is possible through a considerable angle in a conveying plane (13) about a first pivot axis (18) which is substantially horizontally disposed transverse to the conveying plane at a distance below the drive head, with the elevator having a discharge device (16) which projects sideways beyond the conveying plane (13), with the lower part (26) of the discharge device passing the conveyed flow of material over the whole range of pivotal movement of the elevator to the boom conveyor (3), characterised in that a second pivot axis (22) is provided parallel to the conveying plane (13) approximately at right angles to the ducts (5, 6) at a distance below the drive head (7), so that the elevator (1) can execute a lateral deviating movement; and in that the discharge device (16) also ensures the passage of the flow of material to the boom conveyor (3) during this deviating movement.

2. A conveyor device in accordance with claim 1, characterised in that the two pivot axes (18, 22) are formed by a ball joint.

3. A conveyor device in accordance with claim 1, characterised in that the two pivot axes (18, 22) are defined by pivot axles (20, 21) which are united into a cardan suspension (19.

4. A conveyor device in accordance with claim 3, characterised in that the pivot axle (21) which defines the second pivot axis (22) is a continuous shaft (41) which is rotatably mounted in bearings (24) of the ducts (5, 6).

5. A conveyor device in accordance with claim 4, characterised in that the two pivot axles (20, 21) are arranged in a frame (29) with which they are fixedly connected.

6. A conveyor device in accordance with one of the claims 3 to 5, characterized in that the cardan suspension (19) is symmetrically arranged relative to the ducts (5, 6).

7. A conveyor device in accordance with one of the claims 1 to 6, characterised in that the discharge device (16) comprises two relatively movably arranged parts (25, 26) the upstream upper part (25) of which is fixedly connected with a discharge funnel (15) attached to the conveyor duct (5), and the downstream lower part (26) of which opens into an inlet box (4) above the boom conveyor (3).

8. A conveyor device in accordance with claim 7, characterised in that the opening of the lower part (26) into the inlet box (4) is coaxial with the first pivot axis (18).

9. A conveyor device in accordance with claim 8, characterised in that the lower part (26) is substantially immovably connected with the inlet box (14) in the axial direction of the first pivot axis (18), and is rotatably movably arranged relative to this inlet box (4) about the pivot axis (18).

10. A conveyor device in accordance with claim 9, characterised in that a seal (39), preferably a lip seal (figs. 5a, 5b, 5c), is arranged between the lower part (26, 26') and the inlet box (4).

11. A conveyor device in accordance with claim 10, characterised in that the seal is secured to a flange (41) of the inlet box by screws (43) and, optionally, by an annular band (42), and contacts the lower part (26, 26').

12. A conveyor device in accordance with one of the claims 7 to 11, characterised in that the ends of the parts (25, 26) of the discharge device (16) are constructed so that they telescopingly engage within one another, with the telescoping movement taking place along a circular track the center point of which is located on the second pivot axis (22).

13. A conveyor device in accordance with claim 12, characterised in that a sealing sleeve (28) surrounds the movable connection (27) and is fixedly connected both with the upper part (25) and with the lower part (26).

**0 029 599**

FIG.1

1

FIG.2

FIG.2A

FIG.4

FIG.3

FIG.5

FIG.5A

FIG.5B

FIG.5C

4